# EUROPEAN PATENT APPLICATION

(11) **EP 2 161 817 A2**
(43) Date of publication of application: **10.03.2010**
(21) Application number: 09157755.1
(22) Date of filing: 09.04.2009
(51) Int. Cl.: H02K 7/18

(54) **Hand crank generator device**

(30) Priority: 05.09.2008 CN 200820200065 U
(71) Applicant: Dongguan Peng Da Electronic Co., Ltd., Houjie Town, Dongguan City, Guangdong 523-960 (CN)
(72) Inventor: Peng, Feng Tian, Guandong 523960 (CN)
(74) Representative: Beck & Rössig European Patent Attorneys

(57) **Abstract**

A hand crank generator device includes a base and an upper lid. The base and the upper lid engage with each other. A supporting board is provided between the base and the upper lid. A handle, a transmission mechanism and a generator are mounted on the supporting board. The handle is connected with the generator through the transmission mechanism. A battery and a DC/AC box are provided between the base and the upper lid. An input of the battery is electrically connected to an output of the generator. An output of the battery is electrically connected to an input of the DC/AC box. An output of the DC/AC box is connected to a socket. When the handle is turned by a user, the generator will be driven to generate electricity to be stored in the battery for providing greater output power. When there is a need for electricity, the DC/AC box will convert the direct current from the battery into alternating current which is output to the socket for use of household appliances, such as an electric rice cooker, an electric fan, a domestic air conditioner and the like.

## Description

### BACKGROUND OF THE INVENTION

### 1. Field of the Invention

The present invention relates to a generator, and more particularly to a hand crank generator device for generating electric energy.

### 2. Description of the Prior Art

Nowadays, there are many hand-held generators on the market. A conventional hand crank generator device comprises a handle, a transmission mechanism and a generator. The handle is connected with the generator through the transmission mechanism. When there is a need for electricity, the user has to turn the handle continually such that the generator generates electricity constantly. Once the handle is not turned, the generator is unable to generate electricity. This hand crank generator device is unable to store electricity. When the user needs electricity, he/she must turn the handle continually. The user can't do other things at the same time. This is inconvenient for operation. In addition, this hand crank generator device provides lower output power, which is only adapted for mini electric products, not adapted for household appliances, such as an electric rice cooker and an electric fan.

### SUMMARY OF THE INVENTION

The object of the present invention is to overcome the shortcomings existed in the prior art for providing a hand crank generator device to store electric energy.

According to the present invention, there is provided a hand crank generator device as defined by the claims.

The hand crank generator device comprises a base and an upper lid, the base and the upper lid engaging with each other, a supporting board being provided between the base and the upper lid, a handle, a transmission mechanism and a generator being mounted on the supporting board, the handle being connected with the generator through the transmission mechanism, a battery and a DC/AC box being provided between the base and the upper lid, an input of the battery being electrically connected to an output of the generator, an output of the battery being electrically connected to an input of the DC/AC box, an output of the DC/AC box being connected to a socket.

Preferably, the base is provided with a support at a bottom of the base.

The beneficial effect of the present invention is that the present invention provides a hand crank generator device comprising a base and an upper lid, the base and the upper lid engaging with each other, a supporting board being provided between the base and the upper lid, a handle, a transmission mechanism and a generator being mounted on the supporting board, the handle being connected with the generator through the transmission mechanism, a battery and a DC/AC box being provided between the base and the upper lid, an input of the battery being electrically connected to an output of the generator, an output of the battery being electrically connected to an input of the DC/AC box, an output of the DC/AC box being connected to a socket. When the handle is turned by a user, the generator will be driven to generate electricity to be stored in the battery for providing greater output power. When there is a need for electricity, the DC/AC box will convert the direct current from the battery into alternating current which is output to the socket for use of household appliances, such as an electric rice cooker, an electric fan, a domestic air conditioner and the like.

### BRIEF DESCRIPTION OF THE DRAWINGS

Fig. 1 is a perspective view according to a preferred embodiment of the present invention; and
Fig. 2 is an exploded view according to the preferred embodiment of the present invention.

### DETAILED DESCRIPTION OF THE PREFERRED EMBODIMENT

Embodiments of the present invention will now be described, by way of example only, with reference to the accompanying drawings.

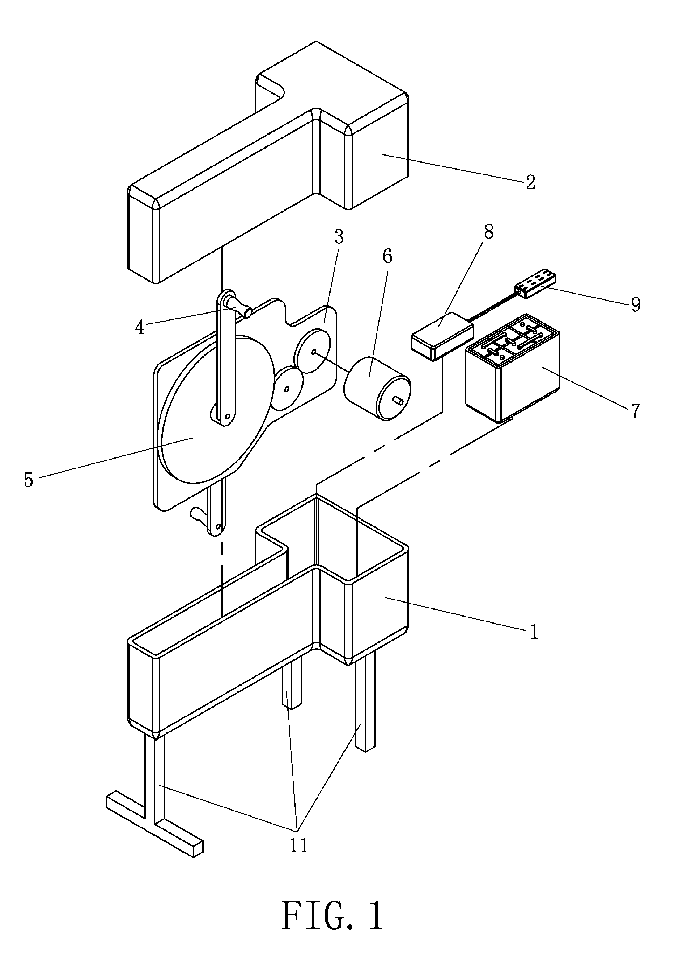

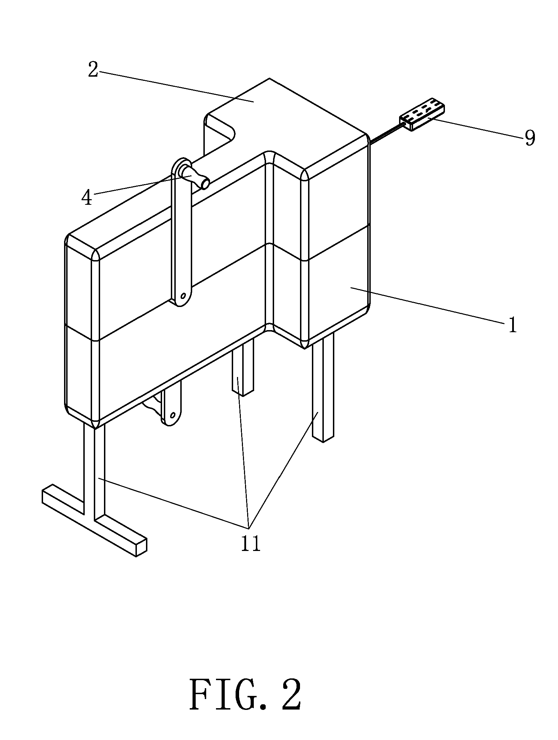

As shown in Figs. 1 and 2, a hand crank generator device according to a preferred embodiment of the present invention comprises a base 1 and an upper lip 2. The base 1 is provided with a support 11 at a bottom of the base 1. The base 1 and the upper lid 2 engage with each other. A supporting board 3 is provided between the base 1 and the upper lid 2. A handle 4, a transmission mechanism 5 and a generator 6 are mounted on the supporting board 3. The handle 4 is connected with the generator 6 through the transmission mechanism 5. When the handle 4 is turned by a user, the generator 6 will be driven to turn for generating electric energy. A battery 7 to store electric energy and a DC/AC box 8 to convert direct current from the battery 7 into alternating current are provided between the base 1 and the upper lid 2. An input of the battery 7 is electrically connected to an output of the generator 6. An output of the battery 7 is electrically connected to an input of the DC/AC box 8. An output of the DC/AC box 8 is connected to a socket 9 through conducting wires. The socket 9 is adapted for connecting with a plug of an electric appliance.

When the handle 4 is turned, the generator 6 will be driven to generate electricity to be stored in the battery 7. When there is a need for electricity, an electric appliance is connected to the plug 9. Therefore, the user may turn the handle 4 in his/her spare time for storing electricity which is ready for use. The present invention can store electric energy for meeting greater output power required and provides electricity for household appliances. The present invention is convenient and practical.

Although particular embodiments of the present invention have been described in detail for purposes of illustration, various modifications and enhancements may be made without departing from the scope of the appended claims.

## Claims

1. Hand crank generator device, comprising:
a base (1) and an upper lid (2), the base (1) and the upper lid (2) engaging with each other,
a supporting board (3) being provided between the base (1) and the upper lid (2), a handle (4),
a transmission mechanism (5) and a generator (6) being mounted on the supporting board (3),
wherein the handle (4) is connected with the generator (6) through the transmission mechanism (5),
**characterized by**:
a battery (7) and a DC/AC box (8) being provided between the base (1) and the upper lid (2),
wherein an input of the battery (7) is electrically connected to an output of the generator (6), an output of the battery (7) is electrically connected to an input of the DC/AC box (8), and an output of the DC/AC box (8) is connected to a socket (9).

2. Hand crank generator device as claimed in claim 1, wherein the base (1) is provided with a support (11) at a bottom of the base (1).
